(19) Europäisches Patentamt
European Patent Office
Office européen des brevets

(11) EP 1 090 049 B1

# (12) EUROPÄISCHE PATENTSCHRIFT

(45) Veröffentlichungstag und Bekanntmachung des Hinweises auf die Patenterteilung:
**21.04.2004 Patentblatt 2004/17**

(21) Anmeldenummer: **99926502.8**

(22) Anmeldetag: **02.06.1999**

(51) Int Cl.[7]: **C08F 210/16**

(86) Internationale Anmeldenummer:
**PCT/EP1999/003810**

(87) Internationale Veröffentlichungsnummer:
**WO 1999/067307 (29.12.1999 Gazette 1999/52)**

(54) **PROPEN-TERPOLYMERE MIT GERINGEM EXTRAHIERBAREM ANTEIL**

PROPYLENE TERPOLYMERS WITH A LOW EXTRACTABLE PORTION

TERPOLYMERES DE PROPYLENE A PROPORTION EXTRACTIBLE MINIME

(84) Benannte Vertragsstaaten:
**AT BE DE ES FR GB IT NL**

(30) Priorität: **19.06.1998 DE 19827328**

(43) Veröffentlichungstag der Anmeldung:
**11.04.2001 Patentblatt 2001/15**

(73) Patentinhaber: **Basell Polyolefine GmbH
50389 Wesseling (DE)**

(72) Erfinder:
- **FISCHER, David
67725 Breunigweiler (DE)**
- **JONES, Peter John Vaughan
Cleveland, Stockton-on-Tees TW22 5LS (GB)**
- **LANGHAUSER, Franz
67152 Ruppertsberg (DE)**
- **BIDELL, Wolfgang
67112 Mutterstadt (DE)**
- **HINGMANN, Roland
68526 Ladenburg (DE)**
- **SCHWEIER, Günther
67159 Friedelsheim (DE)**
- **MARCZINKE, Bernd, Lothar
67354 Heiligenstein (DE)**
- **KERSTING, Meinolf
67435 Neustadt (DE)**
- **MOLL, Ulrich
13410 Lambesc (FR)**

(56) Entgegenhaltungen:
**EP-A- 0 803 352**
**WO-A-94/28039**
**US-A- 4 692 379**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 090 049 B1

## Beschreibung

Die vorliegende Erfindung betrifft Propen-Terpolymere mit 80 bis 99,5 mol-% Struktureinheiten, die sich vom Propen ableiten, 0,1 bis 15 mol-% Struktureinheiten, die sich von Ethen oder einem $C_4$-$C_6$-1-Olefin (I) ableiten und 0,1 bis 15 mol-% Struktureinheiten, die sich von einem weiteren, vom $C_4$-$C_6$-1-Olefin (I) verschiedenen, $C_4$-$C_{12}$-1-Olefin (II) ableiten, wobei die Propen-Terpolymere einen Anteil regioregulärer '1-2'-insertierter Propeneinheiten entsprechend der Formel (1)

$$\frac{['1\text{-}2']}{['1\text{-}2'] + ['2\text{-}1'] + ['1\text{-}3']} \quad (1)$$

von mehr als 0,99 aufweisen, einen Schmelzpunkt ($T_M$), ermittelt nach dem DSC-Peakmaximum, von weniger als 135°C und ein Gewichtsmittel der Molmasse ($M_W$) von mehr als 80.000 g/mol besitzen und wobei der xylollösliche Anteil ($X_L$) des Propen-Terpolymers in Gew.-% der folgenden Ungleichung (2)

$$X_L \leq 1411{,}21 \exp(-0{,}0591\ T_M\ [°C]) -0{,}05 \quad (2)$$

gehorcht.

Weiterhin betrifft die vorliegende Erfindung ein Verfahren zur Herstellung von Propen-Terpolymeren, deren Verwendung zur Herstellung von Folien, Fasern und Formkörpern, die hierbei erhältlichen Folien, Fasern und Formkörper, ferner daraus erhältliche Siegelschichtmaterialien.

Mit Hilfe von Metallocen-Katalysatoren hergestellte binäre Copolymere des Propens mit Ethen oder einem höheren 1-Olefin als Comonomer eignen sich u.a. gut als Materialien für Siegelschichten (EP-A 668 157, DE-A 19 533 337). Gegenüber mit konventionellen Ziegler-Natta-Katalysatoren hergestellten Siegelschichtmaterialien zeichnen sich die mit Metallocen-Katalysatoren hergestellten binären Copolymere des Propens durch einen sehr regelmäßigen, vom Polymerisationsgrad unabhängigen Comonomereinbau aus, was zur Folge hat, daß sie vergleichsweise geringe extrahierbare Anteile aufweisen. Gleichzeitig sind derartige binäre Copolymere des Propens auch bei niedrigen Schmelzpunkten weniger klebrig als Siegelschichtmaterialien, die mit konventionellen Ziegler-Natta-Katalysatoren erhalten werden, weshalb auch unter technischen Bedingungen die Herstellung von binären Copolymeren des Propens mit einem niedrigeren Schmelzpunkt möglich ist. Dies ist deshalb vorteilhaft, da ein niedrigerer Schmelzpunkt üblicherweise niedrigere Siegeltemperaturen erlaubt, wodurch beim Siegelprozeß die Zykluszeiten verringert werden können. Allerdings ist auch bei den mit Metallocen-Katalysatoren hergestellten, binären Copolymeren des Propens eine Zunahme der extrahierbaren Anteile mit abnehmendem Schmelzpunkt festzustellen. Dies hat zur Folge, daß binäre Copolymere des Propens mit relativ geringem Schmelzpunkt für bestimmte Anwendungsbereiche, beispielsweise als Siegelschichtmaterialien im Lebensmittelbereich, aufgrund der zu hohen Zahl extrahierbarer Anteile nur eingeschränkt verwendbar sind.

Aus der EP-A 685 498 sind Propen-Terpolymere bekannt, die mit Hilfe von Metallocen-Katalysatoren hergestellt werden, wobei hierfür einfache Metallocene ohne Substituenten in $\alpha$-Stellung zur Brücke des Metallocen-Komplexes eingesetzt werden. Derartige Propen-Terpolymere zeichnen sich u.a. durch einen Anteil regioirregulärer Propeneinheiten von mehr als 1 % aus [T. Tsutsui et al., J. Mol. Catalysis **56**, 237 (1989)]. Außerdem ist die Menge an extrahierbaren Anteilen, beispielsweise in siedendem Pentan, in diesen Propen-Terpolymeren für einige Anwendungszwecke noch etwas zu hoch.

Weiterhin werden in der DE-A 4 317 654 Terpolymere des Propens mit einpolymerisiertem Ethen und But-1-en beschrieben, wobei während der Polymerisation ein geträgerter Metallocen-Katalysator verwendet wird, bestehend aus einem Metallocen-Komplex mit $\alpha$-Substituenten, welches mit Hilfe eines Gemisches aus zwei verschiedenen Alumoxanen aktiviert wird. Derartige Terpolymere des Propens weisen ebenfalls Mengen von extrahierbaren Anteilen auf, die für einige Anwendungsbereiche noch verbesserungsfähig sind.

Aufgabe der vorliegenden Erfindung war es daher, den genannten Nachteilen abzuhelfen und Terpolymere des Propens zur Verfügung zu stellen, deren extrahierbarer Anteil nochmals verringert ist, die einen niedrigen Schmelzpunkt und eine für die Herstellung von Folien hinreichend hohe Molmasse aufweisen und die ohne große Änderungen in bestehenden, technischen Verfahren zur Herstellung von Siegelschichtmaterialien eingesetzt werden können.

Demgemäß wurden die eingangs definierten Propen-Terpolymere gefunden.

Weiterhin wurde ein Verfahren zur Herstellung der erfindungsgemäßen Propen-Terpolymere sowie deren Verwendung zur Herstellung von Folien, Fasern und Formkörpern gefunden. Die vorliegende Erfindung erstreckt sich ferner auch auf Folien, Fasern und Formkörper und auf Siegelschichtmaterialien aus den erfindungsgemäßen Propen-Terpolymeren.

Die erfindungsgemäßen Propen-Terpolymere weisen 80 bis 99,5 mol-% Struktureinheiten auf, die sich vom Propen ableiten, bevorzugt 85 bis 99 mol-%, insbesondere 87 bis 98 mol-%, ferner 0,1 bis 15 mol-% Struktureinheiten, die sich von Ethen oder einem $C_4$-$C_6$-1-Olefin (I) ableiten, bevorzugt 0,5 bis 13 mol-%, insbesondere 0,5 bis 10 mol-%, sowie 0,1 bis 15 mol-% Struktureinheiten, die sich von einem weiteren, von $C_4$-$C_6$-1-Olefin (I) verschiedenen, $C_4$-$C_{12}$-1-Olefin (II) ableiten, bevorzugt 0,3 bis 12 mol-%, insbesondere 0,3 bis 10 mol-%. Die Summe der mol-% ergibt dabei stets 100.

Geeignete $C_4$-$C_6$-1-Olefine (I) sind u.a. But-1-en, Pent-1-en, 4-Methyl-pent-1-en oder Hex-1-en, wobei vorzugsweise But-1-en, Pent-1-en oder Hex-1-en verwendet werden.

Unter der Bezeichnung $C_4$-$C_{12}$-1-Olefine (II) sollen vor allem But-1-en, Pent-1-en, 4-Methyl-pent-1-en, Hex-1-en, Hept-1-en oder Oct-1-en verstanden werden, wobei But-1-en, Pent-1-en und Hex-1-en besonders bevorzugt eingesetzt werden.

Besonders bevorzugte Propen-Terpolymere enthalten 0,1 bis 15 mol-%, vorzugsweise 0,1 bis 10 mol-% Struktureinheiten, die sich von Ethen, Pent-1-en oder Hex-1-en ableiten, sowie 0,1 bis 15 mol-%, vorzugsweise 0,1 bis 8 mol-% Struktureinheiten, die sich von But-1-en ableiten.

Der Schmelzpunkt ($T_M$) der erfindungsgemäßen Propen-Terpolymere, ermittelt nach dem DSC-Peakmaximum, beträgt weniger als 135°C, insbesondere weniger als 130°C.

Die erfindungsgemäßen Propen-Terpolymere weisen ferner ein Gewichtsmittel der Molmasse ($M_W$) von mehr als 80.000 g/mol, insbesondere von mehr als 150 000 g/mol auf. Das Gewichtsmittel der Molmasse ($M_W$) wird hierbei ermittelt durch Gelpermeationschromatographie (GPC).

Weiterhin sind die erfindungsgemäßen Propen-Terpolymere u.a. auch dadurch gekennzeichnet, daß sie einen Anteil regioregulärer '1-2'-insertierter Propeneinheiten entsprechend der Formel (1)

$$\frac{['1\text{-}2']}{['1\text{-}2'] + ['2\text{-}1'] + ['1\text{-}3']} \qquad (1)$$

von mehr als 0,99 aufweisen. Die regioreguläre '1-2'-Insertion von Propen, sowie die regioirreguläre '2-1'-Insertion und die ebenfalls regioirreguläre '1-3'-Insertion, sind u.a. aus P.Pino et al., Angew. Chemie 92, 869 (1980) oder aus A. Zambelli et al., Macromolecules 21, 617 (1988) bekannt.

Die Bestimmung der jeweiligen Anteile der regioregulären '1-2'-Insertion und der regioirregulären '2-1'-Insertion sowie der regioirregulären '1-3'-Insertion erfolgt u.a. durch $^{13}C$-NMR-Spektroskopie, wie in A. Zambelli et al., Macromolecules 21, 617 (1988) beschrieben.

Die Menge der xylollöslichen Anteil ($X_L$) des erfindungsgemäßen Propen-Terpolymeren in Gew.-% gehorcht der nachfolgenden Ungleichung (2)

$$X_L \leq 1411{,}21 \exp(-0{,}0591\, T_M\, [°C]) -0{,}05 \qquad (2)$$

wobei $T_M$ für den Schmelzpunkt der Propen-Terpolymeren in °C steht.

Bevorzugte erfindungsgemäße Propen-Terpolymere weisen ferner eine Polydispersität ($M_W/M_N$) von weniger als 2,25, speziell von weniger als 2,1 und insbesondere von weniger als 2,0 auf. Die Bestimmung der Polydispersität ($M_W/M_N$) erfolgt vorzugsweise mit Hilfe der Gelpermeationschromatographie unter Verwendung von 1,2,4-Trichlorbenzol als Lösungsmittel.

Die Herstellung der erfindungsgemäßen Propen-Terpolymere erfolgt vorzugsweise nach einem ebenfalls erfindungsgemäßen Verfahren, welches dadurch gekennzeichnet ist, daß man die Comonomere in Anwesenheit eines Metallocen-Katalysatorsystems polymerisiert, welches

A) einen anorganischen oder einen organischen Träger,

B) mindestens einen Metallocen-Komplex und

C) wenigstens eine metalloceniumionenbildende Verbindung aufweist, wobei aber keine zwei verschiedenen Alumoxane als Komponente C) verwendet werden.

Das im ebenfalls erfindungsgemäßen Verfahren verwendete Metallocen-Katalysatorsystem kann ferner neben den Komponenten A), B) oder C) noch mindestens eine organische Metallverbindung eines Alkali- oder Erdalkalimetalls oder eines Metalls der III. Hauptgruppe des Periodensystems enthalten.

Die Polymerisation zur Herstellung der erfindungsgemäßen Propen-Terpolymere mit Hilfe derartiger Metallocen-Katalysatorsysteme wird bei Temperaturen im Bereich von -50 bis 300°C, vorzugsweise im Bereich von 0 bis 150°C, und bei Drücken im Bereich von 0,5 bis 3.000 bar, vorzugsweise im Bereich von 1 bis 100 bar, durchgeführt. Bei diesem ebenfalls erfindungsgemäßen Verfahren sollen die Verweilzeiten der jeweiligen Reaktionsgemische auf 0,5 bis 5 Stunden, insbesondere auf 0,7 bis 3,5 Stunden, eingestellt werden. Es können bei der Polymerisation u.a. auch Antistatika sowie Molmassenregler, beispielsweise Wasserstoff, mitverwendet werden.

Die Polymerisation kann in Lösung, in Suspension, in flüssigen Monomeren oder in der Gasphase durchgeführt werden. Bevorzugt erfolgt die Polymerisation in flüssigen Monomeren (Bulkverfahren) oder in der Gasphase, wobei die gerührte Gasphase bevorzugt ist.

Das ebenfalls erfindungsgemäße Verfahren kann sowohl kontinuierlich als auch diskontinuierlich durchgeführt werden. Geeignete Reaktoren sind u.a. kontinuierlich betriebene Rührkessel oder sogenannte loop-Reaktoren (Schleifenreaktoren), wobei man gegebenenfalls auch eine Reihe von mehreren hintereinander geschalteten Rührkesseln oder loop-Reaktoren verwenden kann (Reaktorkaskade).

Die verwendeten Metallocen-Katalysatorsysteme enthalten als Komponente A) einen anorganischen oder einen organischen Träger. Als anorganischer Träger kann dabei auch ein solches anorganisches Oxid verwendet werden, welches einen pH-Wert, ermittelt nach S.R. Morrison, "The Chemical Physics of Surfaces", Plenum Press, New York [1977], Seite 130ff, von 1 bis 6 und Hohlräume und Kanäle aufweist, deren makroskopischer Volumenanteil am Gesamtpartikel im Bereich von 5 bis 30 % liegt. Bevorzugt können dabei insbesondere solche anorganischen Oxide eingesetzt werden, deren pH-Wert, d.h. deren negativer dekadischer Logarithmus der Protonenkonzentration, im Bereich von 2 bis 5,5 zu finden ist.

Es werden als anorganische Träger insbesondere auch solche anorganischen Oxide verwendet, die einem mittleren Teilchendurchmesser von 5 bis 200 µm, insbesondere von 20 bis 90 µm, und einen mittleren Teilchendurchmesser der Primärpartikel von 0,1 bis 20 µm, insbesondere von 0,1 bis 5 µm, aufweisen. Bei den sogenannten Primärpartikeln handelt es sich dabei um poröse, granuläre Partikel. Die Primärpartikel weisen Poren mit einem Durchmesser von insbesondere 0,1 bis 1000 Å auf. Weiterhin sind die zu verwendenden anorganischen Oxide u.a. auch noch dadurch charakterisiert, daß sie über Hohlräume und Kanäle mit einem mittleren Durchmesser von 0,1 bis 20 µm, insbesondere von 1 bis 15 µm, verfügen. Die anorganischen Oxide weisen ferner insbesondere noch ein Porenvolumen von 0,1 bis 10 $cm^3$/g, bevorzugt von 1,0 bis 5,0 $cm^3$/g, und eine spezifische Oberfläche von 10 bis 1000 $m^2$/g, bevorzugt von 100 bis 500 $m^2$/g, auf. Derartige feinteilige anorganische Oxide sind u.a. durch Sprühtrocknung von gemahlenen Hydrogelen erhältlich und können auch im Handel bezogen werden.

Bevorzugte anorganische Träger sind insbesondere Oxide des Siliciums, des Aluminiums, des Titans oder eines der Metalle der I. bzw. der II. Hauptgruppe des Periodensystems. Als ganz bevorzugtes anorganisches Oxid wird neben Aluminiumoxid oder Magnesiumoxid oder einem Schichtsilikat auch Kieselgel ($SiO_2$) verwendet.

Als Komponente A) können auch sogenannte Cogele, d.h. Gemische von mindestens zwei verschiedenen anorganischen Oxiden, eingesetzt werden.

Weiterhin kann die Katalysatorkomponente A) auch ein organischer Träger sein, beispielsweise ein thermoplastisches Polymer. Bevorzugte organische Träger sind dabei Polymere von Alk-L-enen, insbesondere Propenhomopolymere oder Propencopolymere, ferner Ethenhomopolymere oder Ethencopolymere. Es können auch Polymere des Styrols verwendet werden.

Es werden vorzugsweise pro Gramm Träger, d.h. der Komponente A), 0,1 bis 10000 µmol, insbesondere 5 bis 200 µmol des Metallocenkomplexes, d.h. der Komponente B) eingesetzt.

Als Komponente B) enthält das verwendete Metallocen-Katalysatorsystem mindestens einen oder mehrere Metallocenkomplexe. Als Metallocenkomplexe eigenen sich besonders solche der allgemeinen Formel (I)

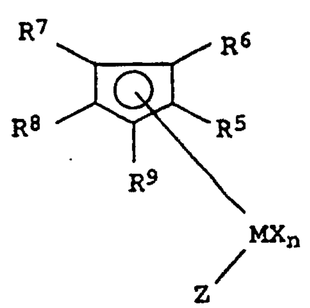

(I)

in der die Substituenten folgende Bedeutung haben:

M Titan, Zirkonium, Hafnium, Vanadium, Niob oder Tantal, sowie Elemente der III. Nebengruppe des Periodensystems und der Lanthanoiden,

X Fluor, Chlor, Brom, Iod, Wasserstoff, $C_1$- bis $C_{10}$-Alkyl, $C_6$- bis $C_{15}$-Aryl, Alkylaryl mit 1 bis 10 C-Atomen im Alkylrest und 6 bis 20 C-Atomen im Arylrest, $-OR^{10}$ oder $-NR^{10}R^{11}$,

n eine ganze Zahl zwischen 1 und 3, wobei n der Wertigkeit von M minus der Zahl 2 entspricht,

wobei

$R^{10}$ und $R^{11}$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,

$R^5$ bis $R^9$ Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, welche wiederum mit einem $C_1$-$C_8$-Alkyl, einem $C_7$-$c_{20}$-Arylalkyl oder einem $C_6$-$C_{10}$-Arylrest substituiert sein können oder $Si(R^{12})_3$ mit

$R^{12}$ $C_1$- bis $C_{10}$-Alkyl, $C_3$- bis $C_{10}$-Cycloalkyl oder $C_6$- bis $C_{15}$-Aryl,

Z für X oder

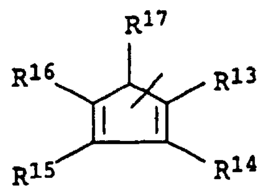

steht,

wobei die Reste

$R^{13}$ bis $R^{17}$ Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, welche wiederum mit einem $C_1$-$C_8$-Alkyl, einem $C_6$-$C_{10}$-Aryl oder einem $C_7$-$C_{20}$-Arylalkylrest substituiert sein können, oder $Si(R^{18})_3$ mit

$R^{18}$ $C_1$- bis $C_{10}$-Alkyl, $C_6$- bis $C_{15}$-Aryl oder $C_3$- bis $C_{10}$-Cycloalkyl,

oder wobei die Reste $R^8$ und Z gemeinsam eine Gruppierung $-R^{19}$-Abilden, in der

$R^{19}$

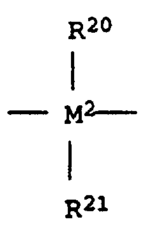 , 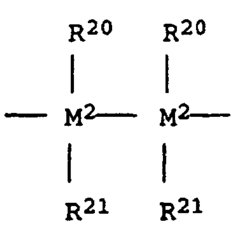 , 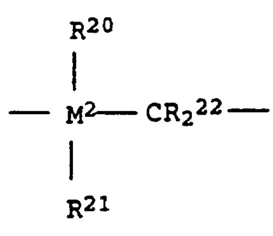 ,

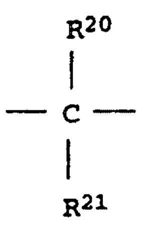 , 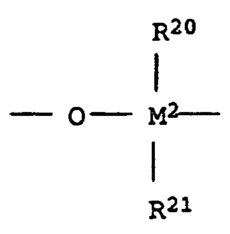 , 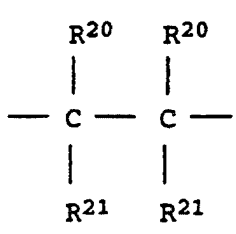 ,

$= BR^{20}$, $= AlR^{20}$, -Ge-, -Sn-, -O-, -S-, $= SO$, $= SO_2$, $= NR^{20}$, $= CO$, $= PR^{20}$ oder $= P(O)R^{20}$ ist, wobei

$R^{20}$, $R^{21}$ und $R^{22}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder wobei zwei benachbarte Reste jeweils mit den sie verbindenden Atomen einen Ring bilden, und

$M^2$ Silicium, Germanium oder Zinn ist,

A —O—, —S—, $>NR^{23}$ oder $>PR^{23}$ bedeuten, mit

$R^{23}$ $C_1$- bis $C_{10}$-Alkyl, $C_6$- bis $C_{15}$-Aryl, $C_3$- bis $C_{10}$-Cycloalkyl, Alkylaryl oder $Si(R^{24})_3$,

$R^{24}$ Wasserstoff, $C_1$- bis $C_{10}$-Alkyl, $C_6$- bis $C_{15}$-Aryl, das seinerseits mit $C_1$- bis $C_4$-Alkylgruppen substituiert sein kann oder $C_3$- bis $C_{10}$-Cycloalkyl

oder wobei die Reste $R^8$ und $R^{16}$ gemeinsam eine Gruppierung $-R^{19}$bilden.

Von den Metallocenkomplexen der allgemeinen Formel I sind

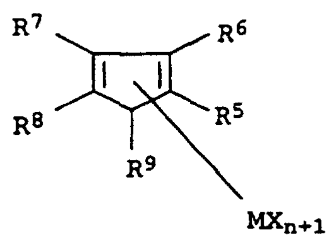

Ia,

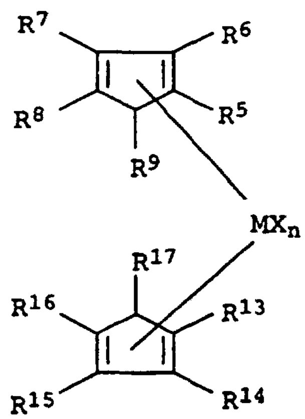

Ib,

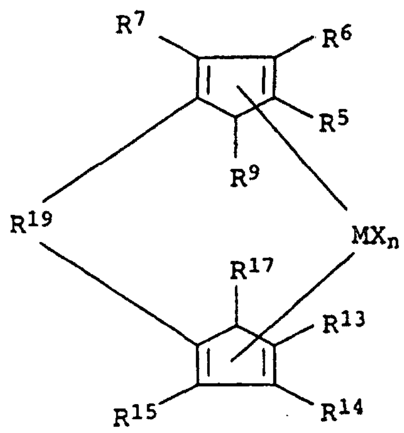

Ic

und

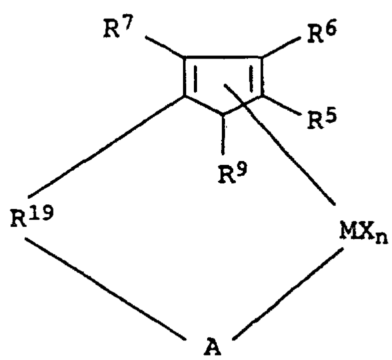

Id

bevorzugt.

Die Reste X können gleich oder verschieden sein, bevorzugt sind sie gleich.

Von den Verbindungen der Formel Ia sind insbesondere diejenigen bevorzugt, in denen

M Titan, Zirkonium oder Hafnium,

X Chlor, $C_1$-bis $C_4$-Alkyl oder Phenyl,

n die Zahl 2 und

$R^5$ bis $R^9$ Wasserstoff oder $C_1$- bis $C_4$-Alkylrtbedeuten.

Von den Verbindungen der Formel Ib sind als bevorzugt diejenigen zu nennen, bei denen

M für Titan, Zirkonium oder Hafnium steht,

X Chlor, $C_1$-bis $C_4$-Alkyl oder Phenyl,

n die Zahl 2,

$R^5$ bis $R^9$ Wasserstoff, $C_1$- bis $C_4$-Alkyl oder $Si(R^{12})_3$,

$R^{13}$ bis $R^{17}$ Wasserstoff, $C_1$- bis $C_4$-Alkyl oder $Si(R^{18})_3$ bedeuten.

Insbesondere sind die Verbindungen der Formel Ib geeignet, in denen die Cyclopentadienylreste gleich sind.

Beispiele für besonders geeignete Verbindungen sind u.a.:

Bis(cyclopentadienyl)zirkoniumdichlorid,

Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen

$R^5$ und $R^{13}$ gleich sind und für Wasserstoff oder $C_1$- bis $C_{10}$-Alkylgruppen stehen,

$R^9$ und $R^{17}$ gleich sind und für Wasserstoff, eine Methyl-, Ethyl-, iso-Propyl- oder tert.-Butylgruppe stehen,

$R^6$, $R^7$, $R^{14}$ und $R^{15}$ die Bedeutung
$R^7$ und $R^{15}$ $C_1$- bis $C_4$-Alkyl
$R^6$ und $R^{14}$ Wasserstoff
haben oder zwei benachbarte Reste $R^6$ und $R^7$ sowie $R^{14}$ und $R^{15}$ gemeinsam für 4 bis 18 C-Atome aufweisende cyclische Gruppen stehen,

$R^{19}$ für

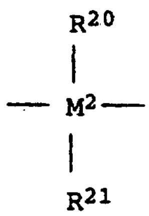

oder

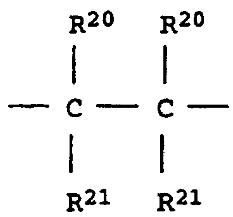

steht,

M für Titan, Zirkonium oder Hafnium und

X für Chlor, $C_1$- bis $C_4$-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-ethylindenyl)-zirkoniumdichlorid,
Dimethylsilandiylbis(-2-methylbenzindenyl)-zirkoniumdichlorid Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,

Diphenylsilandiylbis(2-ethylbenzindenyl)zirkoniumdichlorid, und Diphenylsilandiylbis(-2-methylindenyl)-hafniumdichlorid
sowie die entsprechenden Dimethylzirkoniumverbindungen.

Weitere Beispiele für geeignete Komplexverbindungen sind u.a. Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid und
Dimethylsilandiylbis(-2-methyl-4,6-diisopropylindenyl)zirkoniumdichlorid sowie die entsprechenden Dimethylzirkoniumverbindungen.

Bei den Verbindungen der allgemeinen Formel Id sind als besonders geeignet diejenigen zu nennen, in denen

M für Titan oder Zirkonium,

X für Chlor, $C_1$-bis $C_4$-Alkyl oder Phenyl stehen

$R^{19}$ für

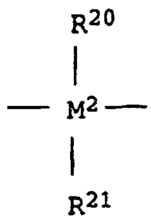

oder

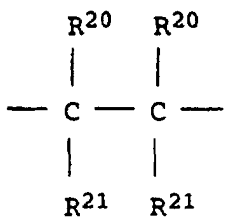

steht,

A für —O—, —S—, >$NR^{23}$ /

und

$R^5$ bis $R^7$ und $R^9$ für Wasserstoff, $C_1$- bis $C_{10}$-Alkyl, $C_3$- bis $C_{10}$-Cycloalkyl, $C_6$- bis $C_{15}$-Aryl oder $Si(R^{12})_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente C) enthält das im ebenfalls erfindungsgemäßen Verfahren einzusetzende Metallocen-Katalysatorsystem wenigstens ein metalloceniumionenbildende Verbindung, wobei aber keine zwei verschiedenen Alumoxane als Komponente C) verwendet werden.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

$$M^3X^1X^2X^3 \qquad \text{II}$$

bevorzugt, in der

$M^3$ ein Element der III. Hauptgruppe des Periodensystems bedeutet, insbesondere B, Al oder Ga, vorzugsweise B,

$X^1$, $X^2$ und $X^3$ für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der $X^1$, $X^2$ und $X^3$ gleich sind, vorzugsweise Tris(pentafluorphenyl)boran.

Als ionische Verbindungen mit lewissauren Kationen sind Verbindungen der allgemeinen Formel III

$$[(Y^{a+})Q_1Q_2...Q_z]^{d+} \qquad \text{III}$$

geeignet, in denen

Y ein Element der I. bis VI. Hauptgruppe oder der I. bis VIII. Nebengruppe des Periodensystems bedeutet,

$Q_1$ bis $Q_z$ für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_3$- bis $C_{10}$-Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy, Silyl- oder Mercaptylgruppen

a für ganze Zahlen von 1 bis 6 und

z für ganze Zahlen von 0 bis 5 steht,

d der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO-A 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO-A 91/09882 genannt, bevorzugtes Kation ist das N,N-Dimethylanilinium.

Die Menge der verwendeten metalloceniumionenbildenden Verbindung C) beträgt bevorzugt 0,1 bis 10 Äquivalente, bezogen auf den Metallocenkomplex I.

Besonders geeignet als metalloceniumionenbildende Verbindung C) sind offenkettige oder cyclische Alumoxanverbindungen der allgemeinen Formel IV oder V

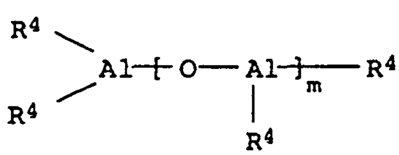

IV

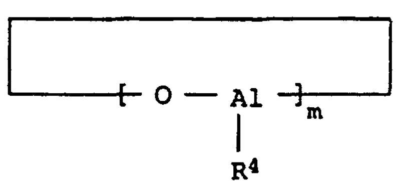

V

wobei $R^4$ eine $C_1$- bis $C_4$-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Im Metallocen-Katalysatorsystem, welches nach dem ebenfalls erfindungsgemäßen Verfahren eingesetzt wird, sind als metalloceniumionenbildende Verbindung C) keine zwei verschiedenen Alumoxane der allgemeinen Formeln IV oder v vorhanden. Als verschiedene Alumoxane werden dabei solche Alumoxane der allgemeinen Formeln IV oder V angesehen, welche unterschiedliche Reste $R_4$ aufweisen.

Vorzugsweise werden sowohl die Metallocenkomplexe (Komponente B) als auch die metalloceniumionenbildende Verbindung (Komponente C) in Lösung eingesetzt, wobei aromatische Kohlenwasserstoffe mit 6 bis 20 C-Atomen, insbesondere Xylole und Toluol, besonders bevorzugt sind.

Weiterhin können als Komponente C) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis $10^6$:1, insbesondere im Bereich von 10:1 bis $10^4$:1, liegt.

Das zur Herstellung der erfindungsgemäßen Propen-Terpolymere eingesetzte Metallocen-Katalysatorsystem kann als Komponente D) gegebenenfalls noch eine Metallverbindung der allgemeinen Formel VI

$$M^1 (R^1)_r (R^2)_s (R^3)_t \qquad \text{VI}$$

in der

| | |
|---|---|
| $M^1$ | ein Alkali-, ein Erdalkalimetall oder ein Metall der III. Hauptgruppe des Periodensystems, d.h. Bor, Aluminium, Gallium, Indium oder Thallium bedeutet, |
| $R^1$ | Wasserstoff, $C_1$- bis $C_{10}$-Alkyl, $C_6$- bis $C_{15}$-Aryl, Alkylaryl oder Arylalkyl mit jeweils 1 bis 10 C-Atom im Alkylrest und 6 bis 20 C-Atomen im Arylrest, |
| $R^2$ und $R^3$ | Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest, |
| r | eine ganze Zahl von 1 bis 3 |

und

s und t ganze Zahlen von 0 bis 2 bedeuten, wobei die Summe r+s+t der Wertigkeit von $M^1$ entspricht,

enthalten.

Von den Metallverbindungen der allgemeinen Formel VI sind diejenigen bevorzugt, in denen

| | |
|---|---|
| $M^1$ | Lithium, Magnesium oder Aluminium bedeutet und |
| $R^1$ bis $R^3$ | für $C_1$- bis $C_{10}$-Alkyl stehen. |

Besonders bevorzugte Metallverbindungen der Formel VI sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Komponente D) eingesetzt wird, ist sie bevorzugt in einer Menge von 800:1 bis 1:1, insbesondere 500:1 bis 50:1 (molares Verhältnis von $M^1$ aus Formel VI zu Übergangsmetall M aus Formel I) im Katalysatorsystem enthalten.

Die Komponenten A), B), C) und gegebenenfalls D) werden zusammen als Metallocen-Katalysatorsystem verwendet.

Die erfindungsgemäßen Propen-Terpolymere zeichnen sich u.a. durch sehr niedrige extrahierbare Anteile bei zugleich niedrigem Schmelzpunkt und weiterhin durch eine für die Herstellung von Folien hinreichend hohe Molmasse aus. Sie eignen sich u.a. gut zur Herstellung von Siegelschichtmaterialien. Allgemein sind sie zur Herstellung von Folien, Fasern und Formkörpern gut geeignet.

Das ebenfalls erfindungsgemäße Verfahren, in welchem die beschriebenen Metallocen-Katalysatorsysteme verwendet werden, ist u.a. durch einen relativ geringen verfahrenstechnischen Aufwand und durch eine hohe Produktivität gekennzeichnet.

Beispiele

Beispiel 1

Herstellung eines Metallocen-Trägerkatalysators

a) Herstellung des Trägermaterials

1000 g Kieselgel (SG 332, Teilchendurchmesser 50 µm, Fa. Grace; 8 Stunden bei 180°C im Vakuum (1 mbar) ausgeheizt) wurden in 5 l Toluol unter Stickstoff ($N_2$)-Atmosphäre suspendiert. Bei einer Temperatur von 18°C wurden 7,75 l (6,83 kg) 1,53 molare Methylaluminoxan(MAO)lösung (in Toluol, Fa. Witco) über 120 Minuten zugegeben. Danach wurde 7 Stunden lang bei Raumtemperatur nachgerührt, filtriert und der Filterkuchen zweimal mit je 2,5 l Toluol gewaschen. Anschließend wurde im Vakuum getrocknet.

b) Beladung mit dem Metallocenkomplex

1 kg des unter a) hergestellten MAO beladenen Kieselgels wurde in einem evakuierten Gefäß vorgelegt. Anschließend wurde unter Rühren eine Lösung von 5,8 g (10 mmol) rac.-Dimethylsilylenbis(2-methylbenzindenyl)zirkondichlorid in 1,32 l 1,53 molarer MAO-Lösung (Toluol) zugegeben. Nach dem Druckausgleich mit $N_2$ wurde 30 Minuten bei Raumtemperatur durchmischt. Dann wurde, zunächst bei 20°C, die Hauptmenge Lösungsmittel im Vakuum abdestilliert (bis kein Lösungsmittel mehr überging). Anschließend wurde die Temperatur in 5°C Schritten auf 55°C erhöht und der Katalysator solange getrocknet, bis er als oranges, gut rieselfähiges Pulver zurückblieb.

Vergleichsbeispiel A

Herstellung von Propen/But-1-en-Copolymeren

In einem trockenen, $N_2$ gespülten 10 l Autoklaven wurden 20 mmol Triisobutylaluminium (TiBA; 10 ml einer 2-molaren Lösung in Heptan) vorgelegt. Nach Zugabe von 4500 g flüssigen Propens und ca. 25 g flüssigen 1-Butens wurden unter Rühren bei Raumtemperatur 697 mg des in Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Nach Ablauf der Reaktionszeit wurde die Polymerisation durch Ablassen des restlichen Propen/1-Buten-Gemisches abgebrochen und das Produkt über ein Bodenventil abgelassen. Es wurden 635 g Polymergries erhalten (Produktivität: 911 g Copolymer/g Katalysator).

Über die Eigenschaften des erhaltenen Copolymeren gibt die nachfolgende Tabelle Auskunft.

Vergleichsbeispiel B

Herstellung von Propen/But-1-en-Copolymeren

Das Vergleichsbeispiel A wurde wiederholt, mit dem Unterschied, daß jetzt 659 mg Trägerkatalysator und 50 g 1-Buten eingesetzt wurden. Es wurden 515 g Polymergries erhalten (Produktivität: 781 g Copolymer/g Katalysator).

Über die Eigenschaften des erhaltenen Copolymeren gibt die nachfolgende Tabelle Auskunft.

Vergleichsbeispiel C

Herstellung von Propen/But-1-en-Copolymeren

Das Vergleichsbeispiel A wurde wiederholt, mit dem Unterschied, daß 592 mg Trägerkatalysator und 100 g 1-Buten eingesetzt wurden. Es wurden 550 g Polymergries erhalten (Produktivität: 929 g Copolymer/g Katalysator).

Über die Eigenschaften des erhaltenen Copolymeren gibt die nachfolgende Tabelle Auskunft.

Vergleichsbeispiel D

Herstellung von Propen/But-1-en-Copolymeren

Das Vergleichsbeispiel A wurde wiederholt, mit dem Unterschied, daß 634 mg Trägerkatalysator und 250 g 1-Buten eingesetzt wurden. Es wurden 395 g Polymergries erhalten (Produktivität: 623 g Copolymer/g Katalysator).
Über die Eigenschaften des erhaltenen Copolymeren gibt die nachfolgende Tabelle Auskunft.

Vergleichsbeispiel E

Herstellung von Propen/Ethen-Copolymeren

In einem trockenen, $N_2$ gespülten 10 l Autoklaven wurden 20 mmol Triisobutylaluminium (TiBA, 10 ml einer 2-molaren Lösung in Heptan) vorgelegt. Nach Zugabe von 150 mg Antistatikum-Lösung (Stadis® 450, Du Pont) und 3500 g flüssigen Propens wurden unter Rühren bei Raumtemperatur 1020 mg des im Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Während der Polymerisation wurden kontinuierlich pro Stunde 47 g Ethen zudosiert, d.h. insgesamt 70 g (2 Gew.-%). Nach Ablauf der Reaktionszeit wurde die Polymerisation durch Ablassen des restlichen Ethen/Propen-Gemisches abgebrochen und das Produkt über ein Bodenventil abgelassen. Es wurden 2020 g Polymergries erhalten (Produktivität: 1980 g Copolymer/g Katalysator).
Bei Stadis® 450 von DuPont handelt es sich um ein kommerziell erhältliches Produkt in Form einer Mischung aus Toluol, Isopropanol, Dodecylbenzolsulfonsäure, einem Polyamin, einem Copolymer aus Dec-1-en und $SO_2$, sowie Dec-1-en.
Über die Eigenschaften des erhaltenen Copolymeren gibt die nachfolgende Tabelle Auskunft.

Vergleichsbeispiel F

Herstellung von Propen/Ethen-Copolymeren

In einem trockenen, $N_2$ gespülten 10 l Autoklaven wurden 20 mmol Triisobutylaluminium (TiBA, 10 ml einer 2-molaren Lösung in Heptan) vorgelegt. Nach Zugabe von 150 mg Antistatikum-Lösung (Stadis® 450, Du Pont) und 3500 g flüssigen Propens wurden unter Rühren bei Raumtemperatur 1033 mg des im Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Während der Polymerisation wurden kontinuierlich pro Stunde 70 g Ethen zudosiert, d.h. insgesamt 105 g (3 Gew.-%). Nach Ablauf der Reaktionszeit wurde die Polymerisation durch Ablassen des restlichen Ethen/Propen-Gemisches abgebrochen und das Produkt über ein Bodenventil abgelassen. Es wurden 2280 g Polymergries erhalten (Produktivität: 2207 g Copolymer/g Katalysator).
Über die Eigenschaften des erhaltenen Copolymeren gibt die nachfolgende Tabelle Auskunft.

Vergleichsbeispiel G

Herstellung von Propen/Ethen-Copolymeren

In einem trockenen, $N_2$ gespülten 10 l Autoklaven wurden 20 mmol Triisobutylaluminium (TiBA, 10 ml einer 2-molaren Lösung in Heptan) vorgelegt. Nach Zugabe von 150 mg Antistatikum-Lösung (Stadis® 450, Du Pont) und 3500 g flüssigen Propens wurden unter Rühren bei Raumtemperatur 994 mg des im Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Während der Polymerisation wurden kontinuierlich pro Stunde 93 g Ethen zudosiert, d.h. insgesamt 140 g (4 Gew.-%). Nach Ablauf der Reaktionszeit wurde die Polymerisation durch Ablassen des restlichen Ethen/Propen-Gemisches abgebrochen und das Produkt über ein Bodenventil abgelassen. Es wurden 2230 g Polymergries erhalten (Produktivität: 2243 g Copolymer/g Katalysator).
Über die Eigenschaften des erhaltenen Copolymeren gibt die nachfolgende Tabelle Auskunft.

Vergleichsbeispiel H

Herstellung von Propen/Ethen-Copolymeren

In einem trockenen, $N_2$ gespülten 10 l Autoklaven wurden 20 mmol Triisobutylaluminium (TiBA, 10 ml einer

2-molaren Lösung in Heptan) vorgelegt. Nach Zugabe von 150 mg Antistatikum-Lösung (Stadis® 450, Du Pont) und 3500 g flüssigen Propens wurden unter Rühren bei Raumtemperatur 973 mg des im Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Während der Polymerisation wurden kontinuierlich pro Stunde 117 g Ethen zudosiert, d.h. insgesamt 175 g (5 Gew.-%). Nach Ablauf der Reaktionszeit wurde die Polymerisation durch Ablassen des restlichen Ethen/Propen-Gemisches abgebrochen und das Produkt über ein Bodenventil abgelassen. Es wurden 2180 g Polymergries erhalten (Produktivität: 2240 g Copolymer/g Katalysator).

Über die Eigenschaften des erhaltenen Copolymeren gibt die nachfolgende Tabelle Auskunft.

Beispiel 2

Erfindungsgemäße Herstellung von Propen/Ethen/But-1-en-Terpolymeren

In einem trockenen, $N_2$ gespülten 10 l Autoklaven wurden 20 mmol Triisobutylaluminium (TiBA, 10 ml einer 2-molaren Lösung in Heptan) vorgelegt. Nach Zugabe von 150 mg Antistatikum-Lösung (Stadis® 450, Du Pont) wurden 2000 g flüssigen Propens, 40 g 1-Buten (2 Gew.-%) und 40 g Ethen (2 Gew.-%) eindosiert. Dann wurden bei Raumtemperatur 790 mg des im Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Nach Ablauf der Reaktionszeit wurde die Polymerisation durch Ablassen des restlichen Monomerengemisches abgebrochen und das Produkt über ein Bodenventil abgelassen. Es wurden 680 g Polymergries erhalten (Produktivität: 860 g Terpolymer/g Katalysator). Der Anteil der regioregulären '1-2'-insertierten Propeneinheiten im erhaltenen Terpolymer entsprechend der Formel (1) beträgt 99,28.

Über die Eigenschaften des erhaltenen Terpolymeren gibt die nachfolgende Tabelle Auskunft.

Beispiel 3

Erfindungsgemäße Herstellung von Propen/Ethen/But-1-en-Terpolymeren

In einem trockenen, $N_2$ gespülten 10 l Autoklaven wurden 20 mmol Triisobutylaluminium (TiBA, 10 ml einer 2-molaren Lösung in Heptan) vorgelegt. Nach Zugabe von 150 mg Antistatikum-Lösung (Stadis® 450, Du Pont) wurden 2000 g flüssigen Propens und 40 g 1-Buten (2 Gew.-%) eindosiert. Dann wurden bei Raumtemperatur 815 mg des im Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Während der Polymerisation wurden kontinuierlich pro Stunde 27 g Ethen zudosiert, d.h. insgesamt 40 g (2 Gew.-%). Nach Ablauf der Reaktionszeit wurde die Polymerisation durch Ablassen des restlichen Monomerengemisches abgebrochen und das Produkt über ein Bodenventil abgelassen. Es wurden 1120 g Polymergries erhalten (Produktivität: 1370 g Terpolymer/g Katalysator). Der Anteil der regioregulären '1-2'-insertierten Propeneinheiten im erhaltenen Terpolymer entsprechend der Formel (1) liegt bei 99,24.

Über die Eigenschaften des erhaltenen Terpolymeren gibt die nachfolgende Tabelle Auskunft.

Beispiel 4

Erfindungsgemäße Herstellung von Propen/But-1-en/Hex-1-en-Terpolymeren

In einem trockenen, $N_2$ gespülten 10 l Autoklaven wurden 20 mmol Triisobutylaluminium (TiBA, 10 ml einer 2-molaren Lösung in Heptan) vorgelegt. Nach Zugabe von 150 mg Antistatikum-Lösung (Stadis® 450, Du Pont) wurden 2000 g flüssigen Propens, 40 g 1-Buten (2 Gew.-%) und 40 g 1-Hexen (2 Gew.-%) eindosiert. Dann wurden bei Raumtemperatur 905 mg des im Beispiel 1 hergestellten Metallocen-Trägerkatalysators über eine Schleuse mit $N_2$ eingeschossen. Anschließend wurde der Autoklav auf 60°C aufgeheizt und 90 Minuten bei dieser Temperatur polymerisiert. Nach Ablauf der Reaktionszeit wurde die Polymerisation durch Ablassen des restlichen Monomerengemisches abgebrochen und das Produkt über ein Bodenventil abgelassen. Es wurden 543 g Polymergries erhalten (Produktivität: 600 g Terpolymer/g Katalysator). Der Anteil der regioregulären '1-2'-insertierten Propeneinheiten im erhaltenen Terpolymer entsprechend der Formel (1) liegt bei 99,12.

Über die Eigenschaften des erhaltenen Terpolymeren gibt die nachfolgende Tabelle Auskunft.

Vergleichsbeispiel I

Herstellung eines Metallocen-Trägerkatalysators (analog DE-A 4 317 654)

a) Herstellung des Trägermaterials

Zu einer Suspension von 20,2 g Kieselgel (Fa. Grace, SG 332, Teilchendurchmesser 20 bis 45 μm) in 200 ml Heptan wurden bei Raumtemperatur im Laufe von 30 Minuten 56 ml einer Lösung von 6,4 g Triethylaluminium in 48 ml Heptan zugetropft. Dabei stieg die Temperatur auf 44°C an. Nach 18 Stunden Rühren bei Raumtemperatur wurde abfiltriert, zweimal mit je 30 ml Pentan gewaschen und anschließend am Ölpumpenvakuum bis zur Rieselfähigkeit des Trägermaterials getrocknet.

b) Herstellung der geträgerten Metallocenkomponente

Zu 50 μmol Dimethylsilandiylbis(-2-methylbenzo[e]-indenyl)zirkondichlorid (29 mg) in 20 ml Toluol wurden 13,1 ml (20 mmol) einer Lösung von Methylalumoxan in Toluol (1,53 molar, Fa. WITCO GmbH) gegeben und 15 Minuten gerührt. Anschließend wurden 5 g des Trägermaterials zugegeben und weiter 30 Minuten gerührt. Zuletzt wurde das Lösungsmittel bei Raumtemperatur im Laufe von 4 Stunden am Ölpumpenvakuum entfernt. Es entstand ein gut rieselfähiges Katalysatorpulver.

Vergleichsbeispiel J

Herstellung eines Propen/Ethen/But-1-en-Terpolymeren (analog DE-A 4 317 654)

In einem trockenen, mit Stickstoff gespülten 10 1 Autoklaven wurden nacheinander 50 g Polypropylengrieß und 4,8 ml Triethylaluminium (1-molare Lösung in Heptan) gegeben und 15 Minuten gerührt. Anschließend wurden 1,5 g des Trägerkatalysators im Stickstoff-Gegenstrom in den Autoklaven gefüllt und dieser verschlossen. Bei einer Rührerdrehzahl von 350 U/min wurde auf 70°C aufgeheizt und gleichzeitig der Innendruck stufenweise durch Zufuhr von gasförmigem Propen bis zum Enddruck von 28 bar erhöht. Anschließend wurde bei einem Druck von 28 bar und 70°C über eine geeignete Verhältnisregelung ein gasförmiges Gemisch aus Propen, Ethen und But-1-en eingeleitet, wobei das Verhältnis der Partialdrücke zwischen Propen, Ethen und But-1-en 25:1:0,65 betrug. Die Polymerisation wurde unter ständigem Rühren bei 28 bar und 70°C im Laufe von 1,5 Stunden durchgeführt. Hierbei wurden die verbrauchten Monomere kontinuierlich ersetzt.

Nach Beendigung der Gasphasenpolymerisation wurde 10 Minuten lang auf Atmosphärendruck entspannt und das entstandene Produkt im $N_2$-Strom ausgetragen. Die Produktivität (g Terpolymer/g Katalysator) lag bei 3970.

Über die Eigenschaften des erhaltenen Terpolymeren gibt die nachfolgende Tabelle Auskunft.

Tabelle

| | | Comonomer-gehalt | Schmelzpunkt $T_M$ | Xylollösliche Anteile $X_L$ | Molmasse Gewichtsmittel $M_W$ | Polydispersität |
|---|---|---|---|---|---|---|
| | | [mol-%] | [°C] | [Gew.-%] | [g/mol] | $M_W/M_N$ |
| Vergl.beispiele | A | 0,3 [$C_4$] | 144,9 | 0,96 | 413000 | 2,5 |
| | B | 0,6 [$C_4$] | 143,2 | 0,98 | 414000 | 2,4 |
| | C | 2,0 [$C_4$] | 141,5 | 1,00 | 340000 | 2,3 |
| | D | 3,1 [$C_4$] | 134,7 | 1,50 | 455000 | 2,3 |
| | E | 0,5 [$C_2$] | 133,9 | 0,50 | 210000 | 2,06 |
| | F | 1,0 [$C_2$] | 131,5 | 0,70 | 197000 | 2,05 |
| | G | 1,6 [$C_2$] | 128,9 | 1,0 | 209000 | 1,80 |
| | H | 2,4 [$C_2$] | 122,9 | 3,4 | 192000 | 1,80 |
| Erfind. Beispiele | 2 | 2,6 [$C_2$]<br>0,5 [$C_4$] | 119,4 | 0,6 | 232500 | 1,70 |
| | 3 | 2,2 [$C_2$]<br>0,4 [$C_4$] | 122,8 | 0,5 | 247500 | 1,70 |
| | 4 | 3,5 [$C_4$]<br>1,1 [$C_6$] | 124,4 | 0,3 | 339060 | 1,84 |
| Vergl.beispiel | J | 4,3 Gew.-% [$C_2$]<br>1,9 Gew.-% [$C_4$] | 109 | 11,0 | | |

Die in dieser Tabelle aufgeführten Eigenschaften wurden folgendermaßen bestimmt.

Comonomergehalt: über $^{13}C$-NMR
Schmelzpunkt ($T_M$): mittels DSC (differential scanning calorimetry)

Xylollösliche Anteile:

In einen 1-Liter-Dreihalskolben mit Rührer, Rückflußkühler und Thermometer wurden 500 ml destilliertes Xylol (Isomerengemisch) eingefüllt und auf 100°C erhitzt. Bei dieser Temperatur wurde das Polymere eingefüllt, anschließend auf den Siedepunkt des Xylols erhitzt und 60 min am Rückfluß gehalten. Anschließend wurde die Wärmezufuhr abgebrochen, innerhalb von 20 min mit einem Kältebad auf 5°C abgekühlt und dann wieder auf 20°C erwärmt. Diese Temperatur wurde für 30 min gehalten. Das ausgefallene Polymerisat wurde abfiltriert und von dem Filtrat exakt 100 ml in einen vorher tarierten 250-ml-Einhalskolben gefüllt. Daraus wurde das Lösungsmittel am Rotationsverdampfer entfernt. Anschließend wurde der verbleibende Rückstand im Vakuumtrockenschrank bei 80°C/200 Torr 2 Stunden lang getrocknet. Nach dem Erkalten wurde ausgewogen.

Der xylollösliche Anteil ergibt sich aus

$$X_L = \frac{g \times 500 \times 100}{G \times V}$$

$X_L$ = xylollöslicher Anteil in %
g = gefundene Menge
G = Produkteinwaage
V = Volumen der eingesetzten Filtratmenge

Molmasse (Gewichtsmittel) $M_w$: mittels Gelpermeationschromatographie (GPC)
Polymerdispersität $M_w/M_N$: mittels Gelpermeationschromatographie (GPC)

In der beiliegenden Figur, die den xylollöslichen Anteil $X_L$ (Gew.-%) in Abhängigkeit vom Schmelzpunkt wiedergibt, ist dargestellt, daß die erfindungsgemäßen Beispiele 2, 3 und 4 im Gegensatz zu den Vergleichsbeispielen A, B, C, D, E, F, G, H und J zu Terpolymeren führen, deren xylollöslicher Anteil $X_L$ die Ungleichung

$$X_L \leq 1411{,}21 \exp(-0{,}0591\ T_M\ [°C])\ -0{,}05 \qquad (2)$$

erfüllt, d.h. die entsprechenden Werte liegen unterhalb der eingezeichneten Kurve.

## Patentansprüche

1. Propen-Terpolymere mit 80 bis 99,5 mol-% Struktureinheiten, die sich vom Propen ableiten, 0,1 bis 15 mol-% Struktureinheiten, die sich von Ethen oder einem $C_4$-$C_6$-1-Olefin (I) ableiten und 0,1 bis 15 mol-% Struktureinheiten, die sich von einem weiteren, vom $C_4$-$C_6$-1-Olefin (I) verschiedenen, $C_4$-$C_{12}$-1-Olefin (II) ableiten, wobei die Propen-Terpolymere einen Anteil regioregulärer '1-2'-insertierter Propeneinheiten entsprechend der Formel (1)

$$\frac{['1\text{-}2']}{['1\text{-}2'] + ['2\text{-}1'] + ['1\text{-}3']} \qquad (1)$$

von mehr als 0,99 aufweisen, einen Schmelzpunkt ($T_M$), ermittelt nach dem DSC-Peakmaximum, von weniger als 135°C und ein Gewichtsmittel der Molmasse ($M_W$) von mehr als 80.000 g/mol besitzen und wobei der xylollösliche Anteil ($X_L$) des Propen-Terpolymers in Gew.-% der folgenden Ungleichung (2)

$$X_L \leq 1411{,}21 \exp(-0{,}0591\ T_M\ [°C])\ -0{,}05 \qquad (2)$$

gehorcht.

**2.** Propen-Terpolymere nach Anspruch 1, welche eine Polydispersität ($M_W/M_N$) von weniger als 2,25 aufweisen.

**3.** Propen-Terpolymere nach den Ansprüchen 1 oder 2, enthaltend 0,1 bis 15 mol-% Struktureinheiten, die sich von Ethen, Pent-1-en oder Hex-1-en ableiten und 0,1 bis 15 mol-% Struktureinheiten, die sich von But-1-en ableiten.

**4.** Propen-Terpolymere nach den Ansprüchen 1 bis 3, enthaltend 0,1 bis 10 mol-% Struktureinheiten, die sich von Ethen, Pent-1-en oder Hex-1-en ableiten und 0,1 bis 8 mol-% Struktureinheiten, die sich von But-1-en ableiten.

**5.** Propen-Terpolymere nach den Ansprüchen 1 bis 5, welche ein Gewichtsmittel der Molmasse ($M_W$) von mehr als 150 000 g/mol und eine Polydispersität ($M_W/M_N$) von weniger als 2,1 aufweisen.

**6.** Verfahren zur Herstellung von Propen-Terpolymeren gemäß den Ansprüchen 1 bis 5, **dadurch gekennzeichnet, daß** man die Comonomere in Anwesenheit eines Metallocen-Katalysatorsystems polymerisiert, welches

A) einen anorganischen oder einen organischen Träger,

B) mindestens einen Metallocenkomplex und

C) wenigstens eine metalloceniumionenbildende Verbindung aufweist, wobei aber keine zwei verschiedenen Alumoxane als Komponente C) verwendet werden.

**7.** Verfahren nach Anspruch 6, wobei das verwendete Metallocen-Katalysatorsystem neben den Komponenten A), B) und C) noch mindestens eine organische Metallverbindung eines Alkali- oder Erdalkalimetalls oder eines Metalls der III. Hauptgruppe des Periodensystems enthält.

**8.** Verfahren nach den Ansprüchen 6 oder 7, wobei als Metallocenkomplex ein Komplex des Titans, Zirkoniums oder Hafniums verwendet wird.

**9.** Verwendung der Propen-Terpolymere gemäß den Ansprüchen 1 bis 5 zur Herstellung von Folien, Fasern oder Formkörpern.

**10.** Folien, Fasern oder Formkörper, erhältlich aus den Propen-Terpolymeren gemäß den Ansprüchen 1 bis 5 als wesentliche Komponente.

**11.** Siegelschichtmaterialien, erhältlich aus den Propen-Terpolymeren gemäß den Ansprüchen 1 bis 5 als wesentliche Komponente.

## Claims

**1.** A propene terpolymer consisting of from 80 to 99.5 mol% of structural units derived from propene, from 0.1 to 15 mol% of structural units derived from ethene or a $C_4$-$C_6$-1-olefin (I) and from 0.1 to 15 mol% of structural units derived from a further $C_4$-$C_{12}$-1-olefin (II) which is different from the $C_4$-$C_6$-1-olefin (I), which propene terpolymer has a proportion of regioregular '1-2'-inserted propene units corresponding to the formula (1)

$$\frac{['1\text{-}2']}{['1\text{-}2'] + ['2\text{-}1'] + ['1\text{-}3']} \qquad (1)$$

of more than 0.99, has a melting point ($T_M$), determined from the DSC peak maximum, of less than 135°C and a weight average molecular weight ($M_W$) of more than 80,000 g/mol and has a xylene-soluble proportion ($X_S$) in % by weight of the propene terpolymer which obeys the following inequality (2)

$$X_S \leq 1411.21 \exp(-0.0591\, T_M\, [°C]) - 0.05 \qquad (2).$$

**2.** A propene terpolymer as claimed in claim 1 which has a polydispersity ($M_w/M_n$) of less than 2.25.

3. A propene terpolymer as claimed in claim 1 or 2 comprising from 0.1 to 15 mol% of structural units derived from ethene, 1-pentene or 1-hexene and from 0.1 to 15 mol% of structural units derived from 1-butene.

4. A propene terpolymer as claimed in any of claims 1 to 3 comprising from 0.1 to 10 mol% of structural units derived from ethene, 1-pentene or 1-hexene and from 0.1 to 8 mol% of structural units derived from 1-butene.

5. A propene terpolymer as claimed in any of claims 1 to 5 which has a weight average molecular weight ($M_w$) of more than 150,000 g/mol and a polydispersity ($M_wM_n$) of less than 2.1.

6. A process for preparing propene terpolymers as claimed in any of claims 1 to 5, which comprises polymerizing the comonomers in the presence of a metallocene catalyst system comprising

A) an inorganic or organic support,

B) at least one metallocene complex and

C) at least one compound capable of forming metallocenium ions, where, however, component C) does not comprise two different aluminoxanes.

7. A process as claimed in claim 6, wherein the metallocene catalyst system further comprises, in addition to the components A), B) and C), at least one organic metal compound of an alkali metal or alkaline earth metal or a metal of main group III of the Periodic Table.

8. A process as claimed in claim 6 or 7, wherein the metallocene complex used is a complex of titanium, zirconium or hafnium.

9. The use of a propene terpolymer as claimed in any of claims 1 to 5 for producing films, fibers or moldings.

10. A film, fiber or molding comprising a propene terpolymer as claimed in any of claims 1 to 5 as significant component.

11. A heat-sealable coating material comprising a propene terpolymer as claimed in any of claims 1 to 5 as significant component.

**Revendications**

1. Terpolymères de propylène contenant 80% à 99,5% en moles de motifs structurels qui sont dérivés du propylène, 0,1% à 15% en moles de motifs structurels qui sont dérivés de l'éthylène ou d'une 1-oléfine (I) en $C_4$ à $C_6$ (I) et 0,1% à 15% en moles de motifs structurels qui sont dérivés d'une autre 1-oléfine en $C_4$ à $C_{12}$ (II), différente de la 1-oléfine en $C_4$ à $C_6$ (I), les terpolymères de propylène présentant une proportion de motifs propylène régioréguliers à insertion '1-2' selon la formule (1)

$$\frac{['1\text{-}2']}{['1\text{-}2'] + ['2\text{-}1'] + ['1\text{-}3']} \quad (1)$$

supérieure à 0,99, un point de fusion ($T_M$), déterminé d'après le maximum de calorimétrie différentielle à balayage (DSC), inférieur à 135°C et une masse moléculaire moyenne en masse ($M_m$) supérieure à 80 000 g/mole, et la partie soluble dans le xylène ($X_L$) du terpolymère de propylène exprimée en % en poids satisfaisant l'inéquation suivante (2)

$$X_L \leq 1411{,}21 \exp(-0{,}0591\ T_M\ [°C]- 0{,}05 \quad (2).$$

2. Terpolymères de propylène selon la revendication 1 qui présentent une polymolécularité ($M_m/M_n$) inférieure à 2,25.

3. Terpolymères de propylène selon les revendications 1 ou 2, contenant 0,1% à 15% en moles de motifs structurels qui sont dérivés de l'éthylène, du pent-1-ène ou du hex-1-ène et 0,1% à 15% en moles de motifs structurels qui

sont dérivées du but-1-ène.

4. Terpolymères de propylène selon les revendications 1 à 3, contenant 0,1% à 10% en moles de motifs structurels qui sont dérivés de l'éthylène, du pent-1-ène ou du hex-1-ène et 0,1% à 8% en moles de motifs structurels qui sont dérivées du but-1-ène.

5. Terpolymères de propylène selon les revendications 1 à 4, qui présentent une masse moléculaire moyenne en masse ($M_m$) supérieure à 150 000 g/mole et une polymolécularité ($M_m/M_n$) inférieure à 2,1.

6. Procédé de préparation de terpolymères de propylène selon les revendications 1 à 5, **caractérisé en ce que** l'on polymérise les comonomères en présence d'un système de catalyseur de métallocène, lequel présente

A) un support inorganique ou organique,
B) au moins un complexe de métallocène et
C) au moins un complexe formant des ions de métallocène, mais dans lequel on n'utilise pas deux aluminoxanes différents en tant que composant C).

7. Procédé selon la revendication 6, dans lequel le système de catalyseur de métallocène utilisé contient, outre les composants A), B) et C), encore au moins un composé métallique organique d'un métal alcalin ou alcalino-terreux du groupe principal III de la Classification Périodique des Éléments.

8. Procédé selon les revendications 6 ou 7, dans lequel on utilise, en tant que complexe de métallocène, un complexe du titane, du zirconium ou de l'hafnium.

9. Utilisation des terpolymères de propylène selon les revendications 1 à 5 pour la fabrication de films, de fibres ou de corps moulés.

10. Film, fibres et corps moulés pouvant être obtenus à partir des terpolymères de propylène selon les revendications 1 à 5 en tant que composant principal.

11. Matériaux de couches de scellage pouvant être obtenus à partir des terpolymères de propylène selon les revendications 1 à 5 en tant que composant principal.

Figur

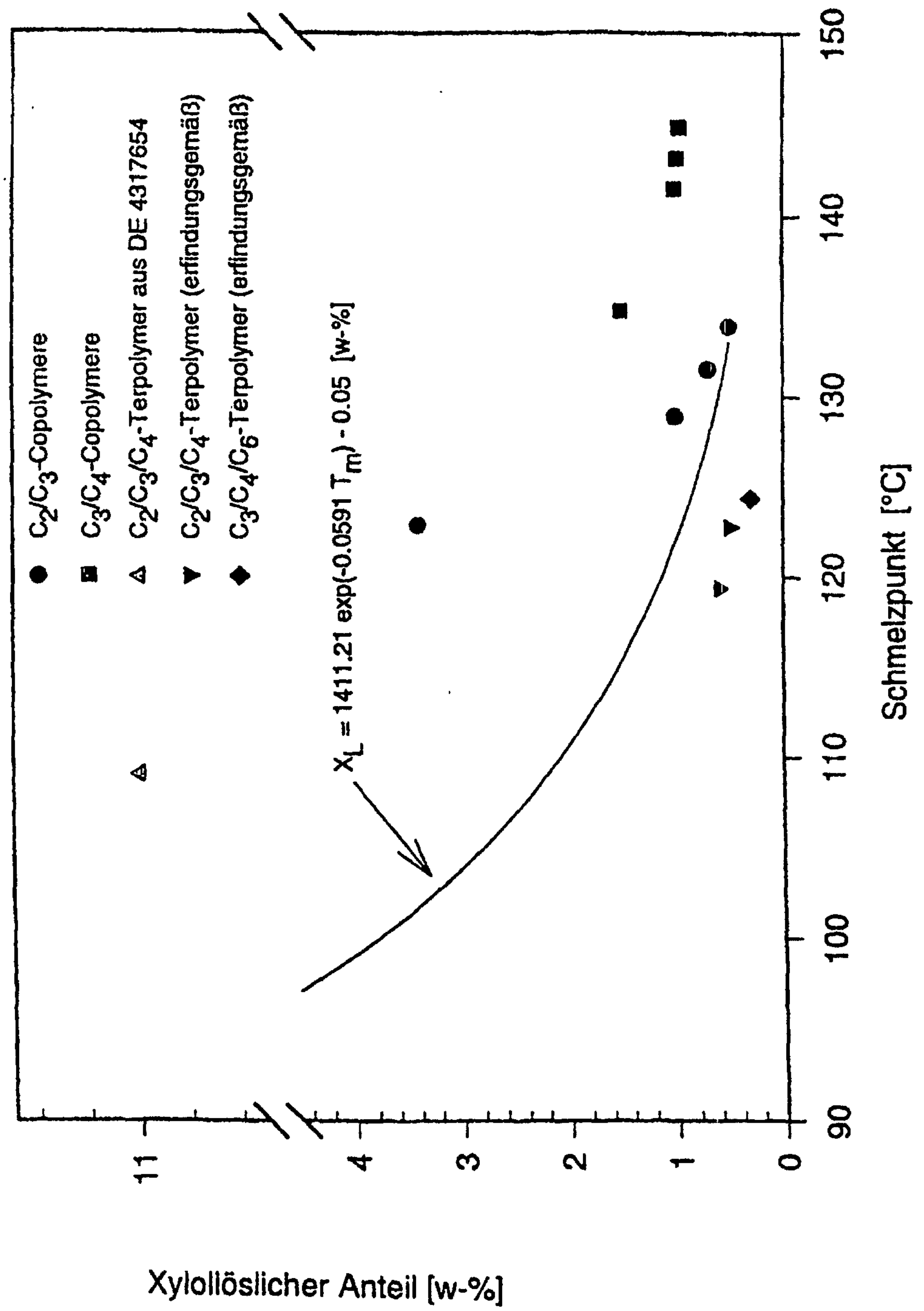
$C_2/C_3$-Copolymere
$C_3/C_4$-Copolymere
$C_2/C_3/C_4$-Terpolymer aus DE 4317654
$C_2/C_3/C_4$-Terpolymer (erfindungsgemäß)
$C_3/C_4/C_6$-Terpolymer (erfindungsgemäß)
$X_L = 1411.21 \exp(-0.0591\ T_m) - 0.05$ [w-%]
90
100
110
120
130
140
150
Schmelzpunkt [°C]
0
1
2
3
4
11
Xylollöslicher Anteil [w-%]